# FASCICULE DE BREVET EUROPEEN

(11) **EP 1 076 886 B1**
(45) Date de publication et mention de la délivrance du brevet: **20.11.2002**
(21) Numéro de dépôt: 99914622.8
(22) Date de dépôt: 20.04.1999
(51) Int. Cl.: G07F 7/10

(54) **PROCEDE POUR EFFECTUER UNE TRANSACTION SECURISEE AU MOYEN D'UNE CARTE A PUCE A TRAVERS UN RESEAU DE TELECOMMUNICATION**
VERFAHREN ZUM DURCHFÜHREN EINER GESICHERTEN TRANSAKTION MITTELS EINER CHIPKARTE ÜBER EIN TELEKOMMUNIKATIONSNETZWERK
METHOD FOR CARRYING OUT A SECURE TRANSACTION USING A SMART CARD VIA A TELECOMMUNICATION NETWORK

(30) Priorité: 12.05.1998 FR 9805973
(43) Date de publication de la demande: 21.02.2001
(73) Titulaire: Gemplus, 13881 Gémenos Cedex (FR)
(72) Inventeur: DREHER, Dominique, F-83740 La Cadière (FR); IMBERT, Patrick, F-13011 Marseille (FR)
(86) Numéro de dépôt international: FR9900927
(87) Numéro de publication internationale: WO99059108

(56) Documents cités:
- EP-A- 0 789 336
- WO-A-85/03787
- WO-A-97/18537
- WO-A-97/45817

## Description

L'invention concerne un procédé pour effectuer une transaction sécurisée au moyen d'une application chargée dans un support de type carte à puce, entre un serveur de transaction et un terminal susceptible d'être non sécurisé, informatique, de télécommunication ou autre, relié au serveur par un réseau de communication (ou télécommunication).

Dans toute la suite on parlera pour simplifier de carte à puce c'est à dire de carte à circuit intégré pour désigner tout support portable comprenant au moins un circuit intégré électronique comportant une mémoire non volatile dans laquelle est chargé au moins un programme d'application ( carte à puce aux normes ISO ou cartes au standard PCMCIA, ou jeton à puce).

Il pourra s'agir d'un programme d'application de paiement dans une carte du type carte de paiement ou carte de crédit, ou d'un programme d'application téléphonique dans une carte du type carte à puce téléphonique rechargeable ou multi-applicative ou encore d'un programme d'application porte-monnaie électronique dans une carte à puce porte-monnaie électronique ou multi-applicative.

On entend par serveur de transaction un équipement informatique de type ordinateur gérant les transactions relatives à l'application chargée dans les cartes qui appartient à l'organisme émetteur des cartes à puce ou qui est placé sous le contrôle de cet organisme.

On entend par transaction le chargement d'unités de valeur ou d'une valeur monétaire ou le chargement de paramètres de paiement.

Les cartes comportant une application bancaire sont émises par l'organisme émetteur qui maîtrise toutes les transactions opérées sur ces applications.

Pour effectuer un chargement ou un rechargement d'unités de valeur il y a un nombre prédéterminé d'actions incontournables à effectuer les deux entités (carte et serveur) se mettant pour cela à communiquer en envoyant des messages comportant des commandes interprétables par chacun d'eux. Ces messages ont notamment pour objet de mettre en oeuvre un mécanisme d'authentification permettant d'assurer toute la sécurité nécessaire à la transaction effectuée, au rechargement par exemple.

Ainsi, un certain nombre d'échanges sont obligatoires pour apporter toute la sécurité nécessaire à une transaction d'autant plus s'il s'agit d'opération de rechargements sur des terminaux non sécurisés (voir WO-A-9718537).

Dans la présente invention on a cherché à limiter le nombre d'échange entre carte à puce et serveur lors d'une transaction pour pouvoir réaliser ces transactions à travers des réseaux de télécommunication tels que le réseau de téléphonie cellulaire GSM par exemple ou que le réseau Internet tout en conservant le même degré de sécurité.

On veut en effet limiter le nombre d'échanges pour limiter le temps de communication et en limiter ainsi le prix, pour limiter le temps d'occupation du terminal téléphonique qui ne peut servir à recevoir ou à passer des appels pendant ce temps et pour limiter les risques d'interruption susceptibles de survenir pendant cette opération.

On veut en particulier, limiter le nombre d'échange entre une application porte-monnaie électronique ou une application bancaire chargée dans une carte et l'organisme émetteur de cette carte (le serveur bancaire) qui est en extrémité de la chaîne qui gère la transaction.

Dans les nouveaux développements portant sur le porte-monnaie électronique il est envisagé de procéder à des chargements ou à des rechargements ou à toute autre écriture d'une donnée monétaire dans les cartes porte-monnaie électronique, à travers un réseau de télécommunication, réseau téléphonique commuté, réseau cellulaire ou réseau Internet. Or la sécurité apportée par les éléments intermédiaires (entre la carte et le serveur), susceptibles d'être utilisés lors d'une telle transaction est incertaine.

On va pour mieux comprendre la suite rappeler les cinq messages nécessaires pour effectuer une transaction type rechargement. Ces cinq messages correspondent à quatre actions permettant à la fois d'effectuer la transaction et d'assurer toute la sécurité requise.

Dans toute la suite on désignera par MAC une information d'authentification cryptographique c'est-à-dire une réponse d'authentification qui est le résultat en pratique d'un calcul cryptographique.

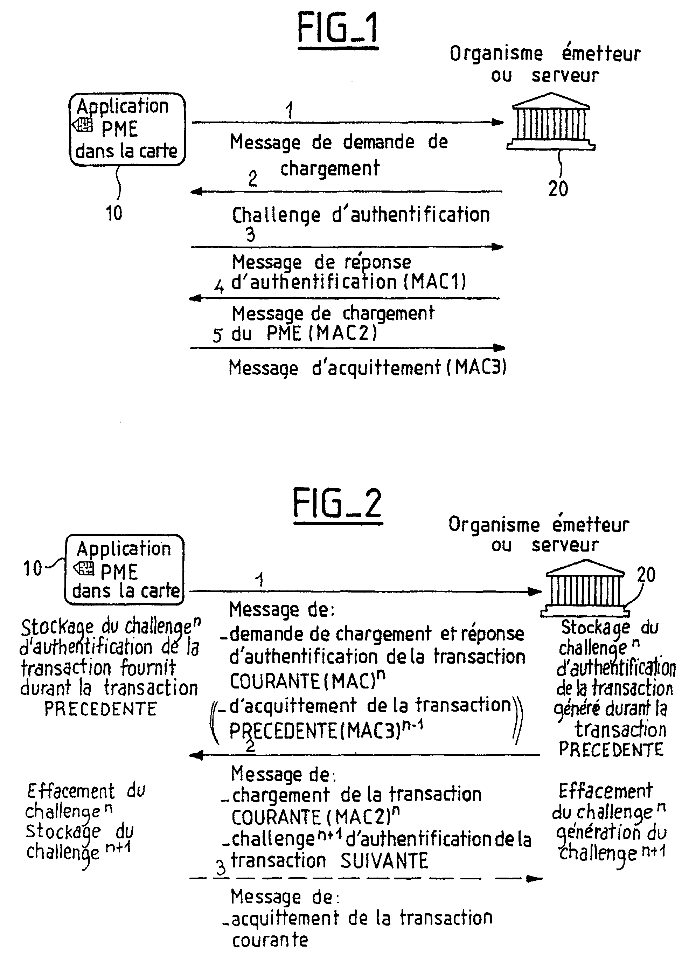

On pourra se reporter au schéma de la figure 1 qui illustre ces échanges :
1 - message de demande de rechargement émis par la carte et envoyé au serveur,
2 - le serveur reçoit cette demande et envoie à la carte une information connue de lui seul qui est en pratique un nombre aléatoire (dénommé challenge),
3 - la carte reçoit ce nombre et effectue un calcul cryptographique au moyen d'une fonction de cryptographie (connue faisant partie de l'état de la technique) et du secret qu'elle détient, puis la carte envoie son résultat de calcul MAC1,
4 - le serveur reçoit ce résultat MAC1 et le vérifie, si la vérification réussit le serveur authentifie la carte et lui envoie un message de rechargement avec un autre résultat de calcul cryptographique MAC2, ce message correspondant à l'action de rechargement proprement dite,
5 - la carte vérifie le résultat de calcul cryptographique MAC2 pour s'assurer que la commande est bien émise par le serveur. Si la vérification est réussie, la carte charge la valeur monétaire et pour s'assurer que tout s'est bien passé, pour la carte, cette dernière envoie un message d'acquittement avec un résultat de calcul cryptographique MAC3 qui est vérifié par le serveur.

- En pratique, le premier message permet de transmettre de l'application dans la carte vers l'organisme émetteur la demande de chargement.
- Le deuxième message transmet de l'organisme émetteur vers l'application dans la carte un "challenge", permettant à la carte de calculer une réponse d'authentification cryptographique de type MAC.
- Le troisième message transmet de la carte vers l'organisme émetteur la réponse cryptographique que l'émetteur va vérifier pour s'assurer de l'authenticité de l'application. Ces deux messages assurent la première action d'authentification carte.
- Le quatrième message transmet de l'émetteur vers la carte la commande de rechargement sécurisé effectuant l'action de chargement de valeur électronique dans la carte.
- Le dernier message effectue l'acquittement, assurant à l'émetteur que le chargement de valeur électronique c'est bien effectué. Ce message, du fait que le terminal (qui n'apparaît pas sur la figure) n'apporte aucune sécurité est nécessaire à l'émetteur.

Tous ces messages sont indispensables dans la mesure où le terminal qui reçoit la carte et à travers duquel se fait le rechargement, n'est pas un appareil sécurisé ou en tous cas n'est pas sous le contrôle de l'organisme émetteur mais sous celui de l'utilisateur. C'est le cas d'un terminal du type PC, ou d'un terminal de téléphonie mobile. Ce n'est pas le cas d'un distributeur automatique de billets (DAB).

Dans le cas d'un distributeur automatique de billet le nombre d'échange entre la carte et le serveur pourrait être réduit, certains de ces messages s'arrêtant au niveau du DAB et étant traités par ce dernier.

Dans la mesure où l'on désire utiliser des terminaux qui sont susceptibles de ne pas être sous le contrôle de l'organisme émetteur c'est à dire des terminaux pour lesquels on n'est pas sûr de la sécurité apportée, il est impératif que toute transaction soit sécurisée.

La présente invention a pour but de limiter le nombre d'échanges utiles à une transaction (comprenant le chargement d'une donnée monétaire ou d'une valeur monétaire ou d'un paramètre de paiement dans une carte à puce) tout en assurant la même sécurité que dans l'état de la technique, afin de limiter l'encombrement du réseau de télécommunication emprunté pendant la transaction et afin que le titulaire du terminal dans lequel est inséré la carte, puisse utiliser son appareil avec le moins de gêne possible.

A cette fin, l'invention propose un procédé consistant à utiliser un protocole de communication comprenant un premier message comportant une demande de transaction et au moins un message subséquent comportant une réponse à ladite demande ; ledit premier message comportant une information d'authentification, émise au cours d'une transaction précédente et ledit message subséquent comporte une information d'authentification pour la transaction suivante.

Ce protocole est particulièrement adapté au protocole de communication de messages courts (SMS) du réseau GSM, à la transmission sur le réseau téléphonique commuté, aux applications banque domestique (Home Banking) par réseau Internet.

La présente invention a plus particulièrement pour objet un procédé pour effectuer une transaction courante sécurisée au moyen d'une application chargée dans un support de type carte à puce, entre un serveur de transaction et un terminal relié au serveur par un réseau de communication, à l'aide d'un protocole de communication, comprenant un premier message comportant une demande de transaction et au moins un message subséquent comportant une réponse à ladite demande, principalement caractérisé en ce que ledit premier message comporte une information d'authentification émise au cours d'une transaction précédente et ledit message subséquent comporte une information d'authentification pour la transaction suivante.

Selon l'invention on utilise un protocole de communication à deux messages ou trois messages maximum.

Ainsi pour une transaction courante (n), le premier message comporte des informations relatives à ladite transaction (n) et à la transaction précédente (n-1) et le deuxième message comporte des informations relatives à ladite transaction courante (n) et à la transaction suivante (n+1) ;
- les informations relatives à la transaction courante (n) du premier message comportent une demande de transaction (n) incluant une information d'authentification de ladite transaction courante (n).
- les informations relatives à la transaction précédente (n-1) comportent une information d'acquittement de ladite information précédente (n-1).
- les informations relatives à la transaction courante (n) du premier message peuvent comporter une information d'acquittement de la transaction courante.

La carte est une carte à puce comportant une application porte-monnaie électronique et la transaction est un rechargement du porte-monnaie électronique.

Le réseau de télécommunication emprunté peut être un réseau de téléphonie cellulaire (GSM) et le terminal est alors un terminal mobile de téléphonie muni d'un accès à une application dans carte à puce.

Le réseau emprunté peut être le réseau Internet, et le terminal est alors un micro-ordinateur du type PC muni d'un accès à une application dans une carte à puce.

D'autres exemples et particularités de l'invention apparaîtront à la lecture de la description qui va suivre et qui est donnée à titre d'exemple non limitatif et en regard des dessins sur lesquels :
- la figure 1, illustre des échanges entre carte à puce et serveur (organisme émetteur) selon l'art antérieur,
- la figure 2, représente le protocole de communication à deux messages entre carte à puce et serveur selon la présente invention,
- la figure 3, représente les différentes actions réalisées selon le procédé conforme à l'invention.

Pour mieux comprendre la suite, il faut entendre par transaction courante n, la transaction en cours pendant une communication (téléphonique) n, par transaction précédente (n-1), la transaction qui a eu lieu pendant la communication (téléphonique) n-1, et par transaction suivante (n+1), la transaction qui aura lieu pendant une communication (téléphonique) suivante n+1.

Le protocole de communication selon l'invention comporte deux ou trois messages maximum pour effectuer une transaction courante.

Une transaction courante comprendra en outre l'émission d'une information d'acquittement de la transaction précédente.

Une transaction courante pourra comprendre en outre l'émission d'une information d'acquittement de la transaction courante.

Lorsque l'information d'acquittement de la transaction précédente est émise au cours du premier message, ladite transaction courante s'effectue à deux messages.

Le premier message pourra comporter en outre un résultat de la transaction précédente tel qu'un solde.

Une transaction pourra être un chargement d'unités de valeur ou le chargement d'une valeur monétaire ou le chargement de paramètres de paiement.

Selon l'exemple qui est donné dans la suite, le premier message est émis par la carte et le deuxième qui comporte la réponse au premier est émis par le serveur (émetteur). On peut bien sûr, pour des applications téléphoniques, prévoir que c'est le serveur qui envoi le premier message et que la carte envoi le deuxième message, réponse au premier.

On se réfère maintenant à un exemple de mise en oeuvre du procédé selon l'invention illustré par le schéma de la figure 2:
- un premier message émis par la carte : la carte envoie une demande de chargement incluant déjà un MAC1 d'authentification de l'application par l'émetteur. Le challenge venant de l'émetteur nécessaire au calcul du MAC1 a été transmis à la carte durant la transaction précédente. De plus est associé à ce message le MAC3 permettant l'acquittement de la transaction précédente.

La carte stocke en mémoire le challenge (n) d'authentification de la transaction fourni durant la transaction précédente. Et l'organisme émetteur stocke le challenge (n) d'authentification de la transaction généré durant la transaction précédente.
- un deuxième message émis par l'émetteur : l'émetteur envoie à la carte le chargement (MAC2) à effectuer durant la transaction courante. Associé à cela l'émetteur envoie un challenge que la carte utilisera durant la transaction suivante pour l'authentification.

L'organisme émetteur efface le challenge (n) et génère le challenge (n+1).

La carte efface le challenge (n) et stocke le challenge (n+1).

L'invention couvre également un procédé utilisant un protocole à trois messages comme cela a été dit précédemment. Dans ce cas et comme cela est représenté en pointillé sur la figure 1, le troisième message comporte l'information d'acquittement de la transaction courante. Il n'est plus dès lors nécessaire de rajouter l'information d'acquittement de la transaction précédente au premier message.

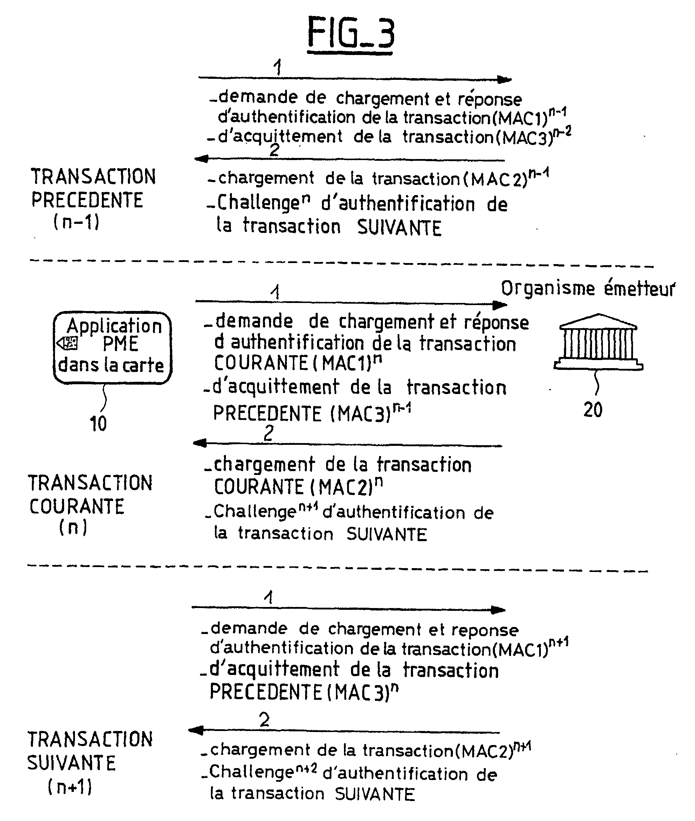

La figure 3, permet d'illustrer les différentes actions effectuées pour un chargement avec un protocole de communication à deux messages conforme à l'invention.

Ces actions sont reportées sur trois transactions successives (n-1), n, (n+1).

Lors d'une communication téléphonique n-1 :
- la carte a envoyé le message 1 comportant la demande de chargement et la réponse d'authentification de la transaction (MAC1)n-1 ainsi que l'acquittement de la transaction (MAC3)n-2;
- l'émetteur a envoyé le message 2, comportant le chargement à effectuer pour la transaction (MAC2)n-1 ainsi que le challenge n d'authentification de la transaction suivante n.

Lors d'une communication téléphonique n :
- la carte envoie le message 1 qui comporte une demande de chargement et la réponse d'authentification de la transaction courante (MAC1)n ainsi que l'acquittement de la transaction précédente (MAC3)n-1;
- l'émetteur envoie le message 2 qui comporte le chargement à effectuer pour la transaction courante (MAC)n ainsi que le challenge (n+1) d'authentification de la transaction suivante (n+1).

Lors d'une communication téléphonique n+1 :
- la carte envoie le message 1 qui comporte une demande de chargement et la réponse d'authentification de la transaction (MAC1)n+1 ainsi que l'acquittement de la transaction précédente (MAC3)n;
- l'émetteur envoie le message 2 qui comporte le chargement de la transaction (MAC2)n+1 ainsi que le challenge n+2 d'authentification de la transaction suivante.

Les exemples donnés correspondent à un protocole de communication à deux messages.

## Revendications

1. Procédé pour effectuer une transaction courante sécurisée au moyen d'une application chargée dans un support du type carte à puce, entre un serveur de transaction et un terminal relié au serveur par un réseau de communication, à l'aide d'un protocole de communication, comprenant un premier message comportant une demande de transaction et au moins un message subséquent comportant une réponse à ladite demande, principalement **caractérisé en ce que** ledit premier message comporte une information d'authentification émise au cours d'une transaction précédente et ledit message subséquent comporte une information d'authentification pour la transaction suivante.

2. Procédé selon la revendication 1, **caractérisé en ce que** ladite transaction courante comprend en outre l'émission d'une information d'acquittement de la transaction précédente.

3. Procédé selon la revendication 1, **caractérisé en ce que** ladite transaction courante comprend en outre l'émission d'une information d'acquittement de la transaction courante.

4. Procédé selon la revendication 2, **caractérisé en ce que** ladite information d'acquittement de la transaction précédente est émise au cours du premier message, ladite transaction courante s'effectuant à deux messages.

5. Procédé selon l'une des revendications précédentes, **caractérisé en ce que** le premier message comporte en outre un résultat de la transaction précédente tel qu'un solde.

6. Procédé selon l'une des revendications précédentes, **caractérisé en ce que** la transaction concerne un chargement d'unités de valeur ou d'une valeur monétaire ou de paramètres de paiement.

7. Procédé selon l'une des revendications précédentes, **caractérisé en ce que** le premier message est émis par la carte.

8. Procédé pour effectuer une transaction selon l'une quelconque des revendications précédentes dans lequel la carte est une carte comportant une application porte-monnaie électronique, **caractérisé en ce que** la transaction est en rechargement dudit porte-monnaie électronique.

9. Procédé selon l'une quelconque des revendications précédentes, **caractérisé en ce que** le réseau de télécommunication emprunté est un réseau de téléphonie cellulaire (GSM) et le terminal est un terminal mobile de téléphonie muni d'un accès à une application de la carte à puce.

10. Procédé selon l'une quelconque des revendications précédentes, **caractérisé en ce que** le réseau emprunté est le réseau Internet, et le terminal est un micro-ordinateur du type PC muni d'un accès à une application de la carte à puce.

## Claims

1. A method for effecting a secure current transaction by means of an application loaded in a medium of the chip card type, between a transaction server and a terminal connected to the server by a telecommunication network, using a communication protocol, comprising a first message including a transaction request and at least one subsequent message including a reply to the said request, mainly **characterised in that** the said first message contains authentication information issued during a previous transaction and the said subsequent message contains authentication information for the following transaction.

2. A method according to Claim 1, **characterised in that** the said current transaction also comprises the sending of information acknowledging the previous transaction.

3. A method according to Claim 1, **characterised in that** the said current transaction also comprises the sending of information acknowledging the current transaction.

4. A method according to Claim 2, **characterised in that** the said information acknowledging the previous transaction is sent during the first message, the said current transaction being effected with two messages.

5. A method according to one of the preceding claims, **characterised in that** the first message also includes a result of the previous transaction such as a balance.

6. A method according to one of the preceding claims, **characterised in that** the transaction concerns a loading of units of value or of a monetary value or of payment parameters.

7. A method according to one of the preceding claims, **characterised in that** the first message is sent by the card.

8. A method for effecting a transaction according to any one of the preceding claims in which the card is a card containing an electronic purse application, **characterised in that** the transaction is a reloading of the said electronic purse.

9. A method according to any one of the preceding claims, **characterised in that** the telecommunication network used is a cellular telephony network (GSM) and the terminal is a mobile telephony network provided with access to an application of the chip card.

10. A method according to any one of the preceding claims, **characterised in that** the network used is the Internet, and the terminal is a microcomputer of the PC type provided with an access to an application of the chip card.

## Patentansprüche

1. Verfahren zur Durchführung einer laufenden gesicherten Transaktion mittels einer in einen Träger vom Typ Chipkarte geladenen Anwendung zwischen einem Transaktionsserver und einem durch ein Kommunikationsnetz mit dem Terminal verbundenen Server mithilfe eines Kommunikationsprotokolls, umfassend eine eine Transaktionsanfrage beinhaltende erste Meldung und mittels einer eine Antwort auf. die besagte erste Meldung beinhaltenden Folgemeldung, im Wesentlichen **dadurch gekennzeichnet, dass** die besagte erste Meldung eine im Verlauf der vorherigen Transaktion ausgegebene Zugangsberechtigungsinformation umfasst und die besagte Folgemeldung eine Zugangsberechtigungsinformation für die nachfolgende Transaktion beinhaltet.

2. Verfahren gemäß Anspruch 1, **dadurch gekennzeichnet, dass** die besagte laufende Transaktion darüber hinaus die Ausgabe einer Freigabemeldung der vorherigen Transaktion umfasst.

3. Verfahren gemäß Anspruch 1, **dadurch gekennzeichnet, dass** die besagte laufende Transaktion darüber hinaus die Ausgabe einer Freigabeinformation der laufenden Transaktion umfasst.

4. Verfahren gemäß Anspruch 2, **dadurch gekennzeichnet**, das die besagte Freigabeinformation der vorherigen Transaktion im Verlauf der ersten Meldung ausgegeben wird, wobei die besagte laufende Transaktion in zwei Meldungen erfolgt.

5. Verfahren gemäß einem der vorherigen Ansprüche, **dadurch gekennzeichnet**, das die erste Meldung darüber hinaus ein Ergebnis der vorherigen Transaktion, wie zum Beispiel einen Saldo, beinhaltet.

6. Verfahren gemäß einem der vorherigen Ansprüche, **dadurch gekennzeichnet, dass** die Transaktion ein Laden von Werteinheiten oder eines Geldwertes oder von Zahlungsparametern umfasst.

7. Verfahren gemäß einem der vorherigen Ansprüche, **dadurch gekennzeichnet, dass** die erste Meldung von der Karte ausgegeben wird.

8. Verfahren zur Durchführung einer Transaktion gemäß einem der vorherigen Ansprüche, bei dem die Karte eine eine Anwendung eines elektronischen Geldbeutels umfassende Karte ist, **dadurch gekennzeichnet, dass** die Transaktion in dem Wiederaufladen des besagten elektronischen Geldbeutels besteht.

9. Verfahren gemäß einem der vorherigen Ansprüche, **dadurch gekennzeichnet, dass** das eingesetzte Telekommunikationsnetz ein schnurloses Telefonnetz (GSM) ist und das Terminal ein mit einem Zugang zu einer Chipkartenanwendung versehenes mobiles Telefonterminal ist.

10. Verfahren gemäß einem der vorherigen Ansprüche, **dadurch gekennzeichnet, dass** das eingesetzte Netz das Internet-Netz ist und das Terminal ein mit einem Zugang zu einer Anwendung der Chipkarte versehener Computer vom Typ PC ist.
